# EUROPEAN PATENT SPECIFICATION

(11) **EP 4 163 697 B1**
(45) Date of publication and mention of the grant of the patent: **11.11.2026**
(21) Application number: 22196412.5
(22) Date of filing: 19.09.2022
(51) Int. Cl.: G02B 27/00, G01J 5/05, G01J 5/00, F02C 7/25

(54) **SYSTEM COMPRISING TURBOMACHINE AND FLAME DETECTOR HAVING A LENS MAINTENANCE SYSTEM**
SYSTEM MIT EINER TURBOMASCHINE UND FLAMMENDETEKTOR MIT EINEM WARTUNGSSYSTEM FÜR DIE FLAMMENDETEKTORLINSE
SYSTÈME COMPRENANT UNE TURBOMACHINE ET UN DÉTECTEUR DE FLAMME ÉQUIPÉ D'UN SYSTÈME D'ENTRETIEN DES LENTILLES

(30) Priority: 07.10.2021 IN 202111045717
(43) Date of publication of application: 12.04.2023
(73) Proprietor: GE Vernova Technology GmbH, 5400 Baden (CH)
(72) Inventor: PRAKASH, Rajan, 560066 Bangalore (IN); DASOJI, Anil Kumar, 560066 Bangalore (IN); DANNER, Lawrence Melville, Greenville, 29615 (US)
(74) Representative: Novagraaf Group

(56) References cited:
- JP-A- H06 317 181
- JP-A- H09 133 023
- US-A- 5 241 148
- US-A1- 2016 320 292

## Description

### TECHNICAL FIELD

The disclosure relates generally to flame detectors and, more particularly, to a maintenance system for cleaning and/or cooling a lens of a flame detector for a turbomachinery application.

### BACKGROUND

In certain industrial machines, infrared or ultraviolet flame detectors or sensors are typically used for the early detection of fire within an enclosure of the machine. For example, turbomachines such as gas turbine systems use flame detectors for the early detection of fire within an enclosure of the gas turbine system. The environment within the enclosures of these industrial machines can be hot, harsh, and dirty. Despite this environment, the lenses of these sensors must be kept clean and within an allowed temperature limit for accurate operation.

US-2016/320292-A1 discloses a method for cleaning an optical entry window of a fire detector, wherein an intermittent gas stream is discharged from at least one gas exit opening onto the surface of the optical entry window.

US-5241148-A discloses an apparatus for measuring heating temperature in a high electric field of microwaves. The apparatus includes a probe formed of a microwave transparent material disposed inside a microwave heating chamber. When a purge gas releasing function is added to the probe, the detection of infrared rays can be performed with water vapor and a decomposition gas removed by a purge gas.

JP-H06-317181-A discloses a gas turbine combustion device whose flame detecting window is automatically cleaned. A flame detecting device is provided with an air circulating pipe having one end open to the detecting window front portion of the flame detecting device and the other end connected to an air tank having pressure almost equal to the internal pressure of a combustion chamber during operation of a gas turbine.

JP-H09-133023-A discloses a device which can maintain purification of a detector window in a flame detection device detecting a flame in a combustor. A clean air injection device injects clean air toward a detector window.

### BRIEF DESCRIPTION

The scope of the present invention is defined by the appended claim 1. Preferrred embodiments are defined by the dependent claims.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic view of an illustrative turbomachine including a cleaning system for a flame detector on an enclosure of the turbomachine, according to embodiments of the disclosure.
FIG. 2 shows a schematic view of a maintenance system for a flame detector, according to a comparative example useful for understanding the invention.
FIG. 3 shows a schematic view of a maintenance system for a flame detector, according to a comparative example.
FIG. 4 shows a schematic view of a maintenance system for a flame detector, according to a comparative example.
FIG. 5 shows a schematic view of a maintenance system for a flame detector, according to a comparative example.
FIG. 6 shows a schematic view of a maintenance system for a flame detector, according to the invention.
FIG. 7 shows a perspective view of an outlet of a maintenance system for a flame detector, according to optional embodiments of the invention.
FIG. 8 shows a schematic view of a maintenance system for a flame detector, according to another embodiment of the invention.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current disclosure, it will become necessary to select certain terminology when referring to and describing relevant machine components within, for example, turbomachine such as a gas turbine system. To the extent possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components but do not preclude the presence or addition of one or more other features, integers, steps, operations, elements, components, and/or groups thereof. "Optional" or "optionally" means that the subsequently described event or circumstance may or may not occur or that the subsequently described component or element may or may not be present, and that the description includes instances where the event occurs or the component is present and instances where it does not or is not present.

Where an element or layer is referred to as being "on,'' "engaged to," "connected to" or "coupled to" another element or layer, it may be directly on, engaged to, connected to, or coupled to the other element or layer, or intervening elements or layers may be present. In contrast, when an element is referred to as being "directly on," "directly engaged to," "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

As indicated above, the disclosure provides a maintenance system for a flame detector on an enclosure of, for example, a turbomachine. In certain embodiments, the maintenance system may include a conduit having an inlet at an exterior of the enclosure and an outlet at an interior of the enclosure. The outlet is adjacent the flame detector. The maintenance system also includes a source of air, and a valve fluidly coupling the inlet of the conduit and the source of air. The valve is configured to deliver a compressed air from the source of air through the outlet of the conduit onto a surface of the flame detector, thereby removing contaminants from the surface. A controller can be provided to automatically operate the maintenance system when a fault signal is observed. The maintenance system can be used to clean and/or to cool the lens of the flame detector; hence, while referred to as a 'cleaning system' herein for brevity, it may also be referenced herein as a 'cleaning and cooling system'. The maintenance system is easy to install on any system, and the valve of the maintenance system is readily accessible from outside the system.

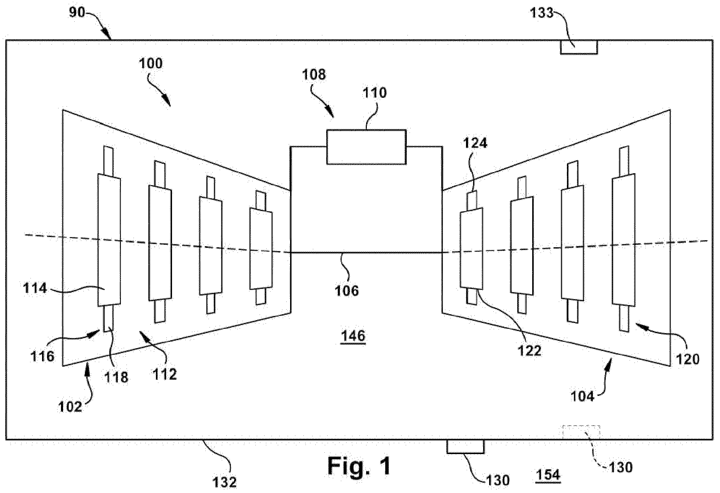

FIG. 1 shows a schematic view of an illustrative system 90 including a turbomachine in the form of a gas turbine (GT) system 100 within an enclosure 132 according to embodiments of the disclosure. Enclosure 132 can include any form of barrier for sealing off an area. Ventilation fan(s) 133 can pull air from enclosure 132. While a GT system 100 will be described as an illustrative setting, it is emphasized that the teachings of the disclosure are applicable to a wide variety of industrial machines including other turbine systems and a wide variety of other devices such as pump skids, combustion engines, and other devices in which flame detection is desired.

FIG. 1 shows GT system 100 including a compressor 102 operatively coupled to a turbine 104 through a shared compressor/turbine shaft 106. Compressor 102 is also fluidly connected to turbine 104 through a combustor assembly 108. Hence, turbine 104 is operatively coupled to compressor 102 and combustor assembly 108. Combustor assembly 108 may include any now known or later developed combustor(s) 110 such as, but not limited to, a can annular combustor system including several can combustors in an annular array about the shaft 106 or an annular combustor system. Hence, combustor assembly 108 may be mounted to GT system 100 in a wide range of configurations including, but not limited to, being arranged in a can-annular array. Compressor 102 includes a plurality of compressor rotor wheels 112. Rotor wheels 112 include a first stage compressor rotor wheel 114 having a plurality of first stage compressor rotor blades 116 each having an associated airfoil portion 118. Stationary blades (not shown) within compressor 102 can direct air through compressor 102 against compressor rotor blades 116 of compressor 102. Similarly, turbine 104 includes a plurality of turbine rotor wheels 120 including a first stage turbine wheel 122 having a plurality of turbine blades 124, e.g., provided as first stage turbine rotor blades. Stationary blades (not shown) within turbine 104 can direct gases through turbine 104 against turbine blades 124 of turbine 104.

A flame detector 130 identifies the presence of a flame. As shown in FIG. 1, flame detector 130 may be employed in one or more locations looking into an interior 146 of enclosure 132 (two shown, one in dashed lines, but could be one or more than two). For example, flame detector 130 may be operatively coupled on enclosure 132 from outside or inside to determine the presence of a flame due to various reasons such as, but not limited to, leakage of a gas turbine fuel system. Flame detector 130 may include any now known or later developed infrared or ultraviolet flame light detectors.

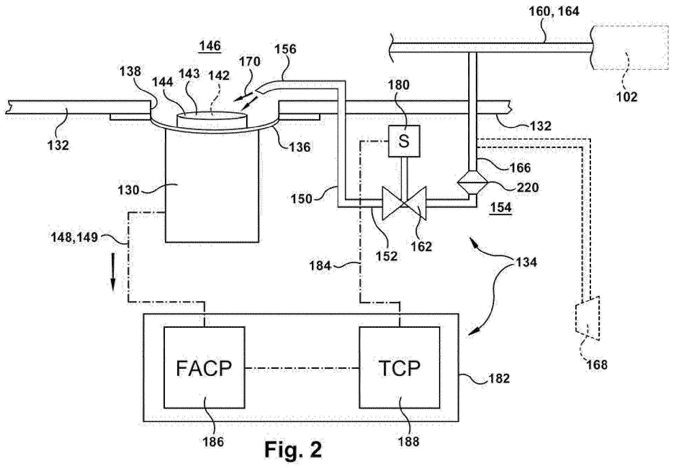

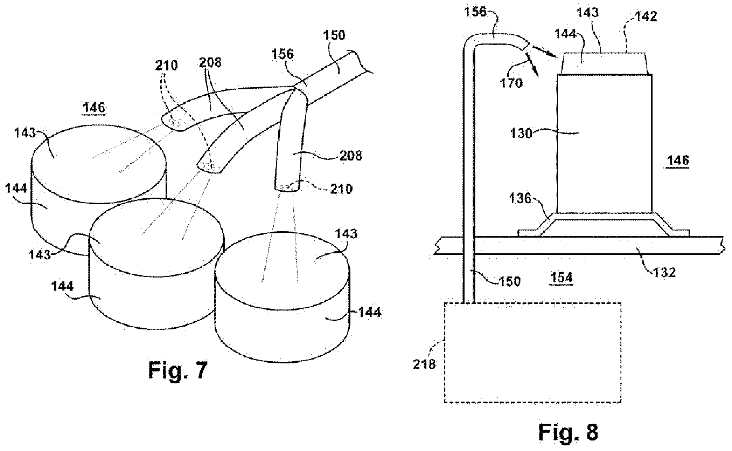

FIG. 2 shows a schematic view of a maintenance system 134 for cleaning and/or cooling flame detector 130 for GT system 100 (FIG. 1) according to embodiments of the disclosure. In FIG. 2, flame detector 130 is illustrated on an outside of enclosure 132 and looking into interior 146 through an opening 138. Hence, in certain embodiments, flame detector 130 is positioned on enclosure 132 from outside, i.e., it extends outwardly from the outside of enclosure 132. As will be described herein, flame detector 130 may alternatively be mounted inside enclosure 132, see e.g., FIG. 8. Flame detector 130 may be mounted using any now known or later developed mounting system 136 such as, but not limited to, a mounting flange.

During operation, contaminants 142 may accumulate on a surface 143 of a lens(es) 144 of flame detector 130 that is directed into interior 146 of enclosure 132 in which a flame is anticipated. In most drawings, lens 144 is shown as a singular element, but it may include several lenses 144 (see e.g., FIG. 7), all of which may be cleaned using maintenance system 134 described herein. Contaminants 142 may include dirt, soot, or any other material that may cause a fault of flame detector 130, such as inoperability (e.g., loss of field of view) or other non-optimal operation thereof (e.g., lack of clear view). Where contaminants 142 create a fault of flame detector 130, flame detector 130 may create a fault signal 148 indicative of the fault's presence. Alternatively, or in addition to the above-described scenario, flame detector 130 may also create fault signal 148 where it is overheating and requires cooling (using maintenance system 134). Flame detector 130 may generate fault signal 148 indicative of overheating or may send a temperature signal 149 that is used by a controller 182 to determine whether a fault is observed and to deliver compressed air 170 to cool lens(es) 144, e.g., by determining whether the temperature is above a desired temperature. In this latter case, controller 182 generates the fault signal.

Maintenance system 134 may include a conduit 150 (first conduit) having an inlet 152, as shown in this example, at an exterior 154 of enclosure 132, and an outlet 156 at interior 146 of enclosure 132. Conduit 150 may pass through enclosure 132 in a sealed manner via any now known or later developed fashion.

Maintenance system 134 also includes a source of air 160. Source of air 160 is a continuous source of air, indicating the air flow is not intermittent as would be the case where structures other than a valve 162, described herein, may be present. Source of air 160 can be some form of a compressor 102, 168. For example, as shown in FIG. 2, source of air 160 can include an instrument air 164 from, for example, compressor 102 of GT system 100. Instrument air 164 may be obtained from any location within GT system 100, e.g., a plenum of combustor(s) 110 (not shown). In other examples, an independent compressor 168 (shown in dashed lines) may be source of air 160. Independent compressor 168 may be inside or outside of enclosure 132. In embodiments of the invention, as will be described, source of air 160 is ambient surroundings of enclosure 132, i.e., exterior 154 of enclosure 132.

Continuing with FIG. 2, maintenance system 134 may also include valve 162 fluidly coupling inlet 152 of conduit 150 and source of air 160. Valve 162, regardless of form, is positioned at exterior 154 of enclosure 132, making it readily accessible from outside of GT system 100 in this example application. In FIG. 2, source of air 160 includes a conduit 166 (second conduit) extending from interior 146 of enclosure 132 to valve 162 in a sealed manner. Valve 162 is fluidly coupled to conduit 166 for delivering instrument air 164 to interior 146 of enclosure 132. Valve 162 is configured to deliver a compressed air 170 from source of air 160 through outlet 156 of conduit 150 onto surface(s) 143 of flame detector 130, e.g., of lens(es) 144, to clean and/or cool surface(s) 143. Compressed air 170 has sufficient force to remove enough contaminants 142 from surface(s) 143 and/or to cool lens(es) 144 to, e.g., alleviate issues that may be causing fault signal 148 or other issues. Compressed air 170 also has temperature and flow rate to cool surface(s) 143 of lens(es) 144 or other parts of flame detector 130. As will described relative to FIG. 7, outlet 156 may be branched into any number of openings to clean any number of surfaces 143 and/or lenses 144 used.

In FIG. 2, valve 162 includes a solenoid valve 180. Solenoid valve 180 may include any now known or later developed electrically operable valve. Maintenance system 134 may also include a controller 182 operatively coupled to flame detector 130 and solenoid valve 180. Controller 182 operates solenoid valve 180 to deliver compressed air 170 from outlet 156 of conduit 150 onto surface 143 of flame detector 130 in response to fault signal 148. That is, compressed air 170 is delivered to clean and/or cool surface 143 when flame detector 130 has a fault. Controller 182 sends an operation signal 184 to open or close solenoid valve 180 as appropriate. Otherwise, compressed air 170 is not delivered to surface 143.

Controller 182 can take a variety of forms. For example, in FIG. 2, controller 182 may include part(s) of a fire alarm control panel (FACP) 186 and a turbine control panel (TCP) 188. Alternatively, controller 182 may be a free-standing controller. In any event, controller 182 includes any electronic control device(s) and/or logic capable of operating solenoid valve 180, as described herein. Fault signal 148 and operation signal 184 may be communicated in any fashion, e.g., through wires or wirelessly. The duration that compressed air 170 is directed toward or onto or across surface 143 can be user defined, e.g., a set time interval, until fault signal 148 is alleviated, etc.

Rather than providing compressed air 170 in response to a fault signal 148, controller 182 may proactively provide compressed air 170 to surface 143 of the lens 144 at a prescribed time interval (e.g., every "x" hours) or at an interval based on operating time of the gas turbine 100. Controller 182 may take into account the type of fuel being combusted by the combustors 110 in determining or adjusting the maintenance interval.

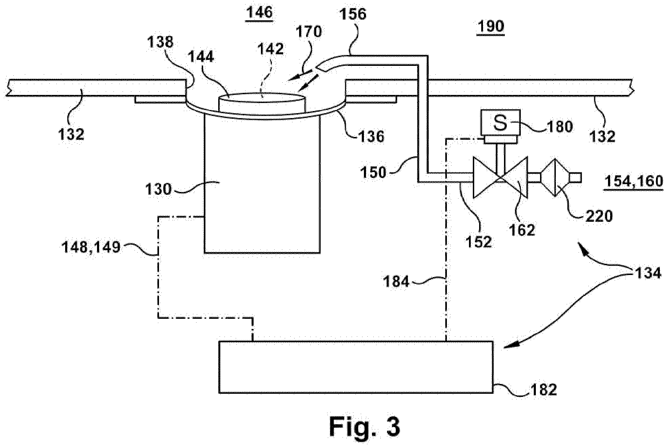

Referring to FIG. 3, a schematic view of another maintenance system 134 is illustrated. Here, source of air 160 includes ambient surroundings of enclosure 132, i.e., exterior 154 of enclosure 132. Enclosure 132 is ventilated by way of ventilation fan(s) 133 (FIG. 1) that pull air from enclosure 132 thereby creating a negative pressure 190 therein. Negative pressure 190 can create compressed air 170 from ambient air drawn into conduit 150 through solenoid valve 180. Controller 182 operates as described relative to FIG. 2.

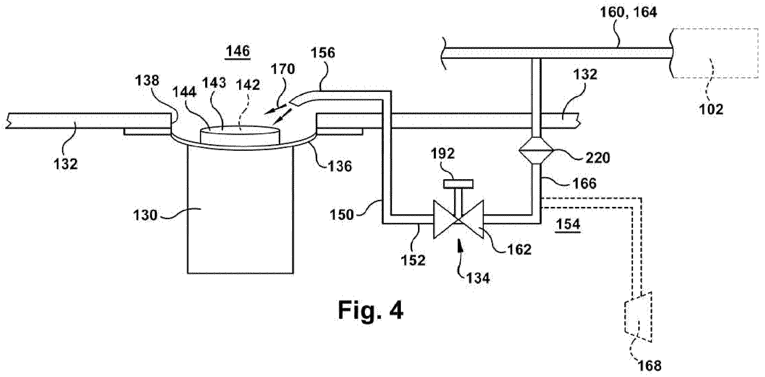

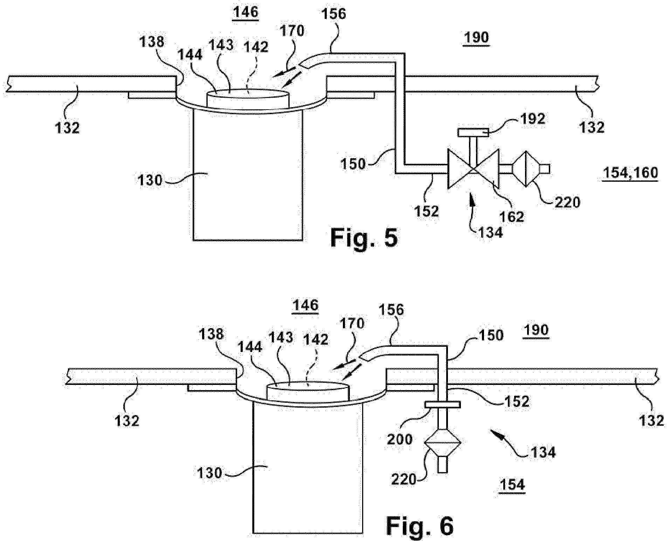

FIGS. 4 and 5 show schematic views of other maintenance systems 134. In FIGS. 4 and 5, solenoid valve 180 (FIGS. 2-3) has been replaced by a manually operable valve 192. Controller 182 is also removed. Manually operable valve 192 is accessible from exterior 154 of enclosure 132. In FIG. 4, source of air 160 includes air 164 from a compressor. In one example, the compressor may include compressor 102 (FIG. 1) of GT system 100 (FIG. 1). In another example, source of air 160 may include air 164 from an independent compressor 168 (shown in dashed lines). Independent compressor 168 may be inside or outside of enclosure 132. In any event, valve 192 is fluidly coupled to conduit 166 delivering air 164 from interior 146 (or exterior 154) of enclosure 132. Manually operable valve 192 is normally closed, preventing compressed air 170 from being directed onto surface 143. When a user determines cleaning or cooling is required, manually operable valve 192 may be opened for a period of time to clean or cool, e.g., surface(s) 143. In FIG. 5, source of air 160 includes ambient surroundings of enclosure 132, i.e., exterior 154. Here, enclosure 132 has negative pressure 190 therein to create compressed air 170 from ambient air drawn into conduit 150 through valve 192.

Referring to FIG. 6, in an embodiment, valve 162 is replaced with a metering orifice 200 on inlet 152 of conduit 150. As noted, enclosure 132 has negative pressure 190 therein. Metering orifice 200 may be any now known or later developed device for allowing a controlled flow of air into inlet 152 of conduit 150 under the influence of negative pressure 190 in enclosure 132. Negative pressure 190 creates compressed air 170 from ambient air drawn into (and through) metering orifice 200. Compressed air 170 exits through outlet 156 of conduit 150 onto surface(s) 143 of flame detector 130, thereby removing contaminants 142 from surface(s) 143, and/or cooling surface(s) 143, other parts of flame detector 130, or both. The FIG. 6 embodiment works continuously.

It will be noted that compressed air 170 can be directed onto, toward, or across surface(s) 143 or other parts of flame detector 130 to remove contaminants 142 and/or cool flame detector 130. In one embodiment, as shown in FIG. 7, outlet 156 of conduit 150 may include any number of branches 208 to direct compressed air 170 at any number of locations. FIG. 7 also shows that outlet 156 and/or branches 208 thereof may optionally include at least one nozzle 210 thereon. Nozzle(s) 210 can include any now known or later developed air nozzles to direct compressed air 170 or further compress the air. Any number of nozzle(s) 210 can be used.

In the previous embodiments, flame detector 130 was illustrated as outside enclosure 132 and looking through opening 138 (FIGS. 2-6) in enclosure 132. As noted, and as shown in FIG. 8, flame detector 130 may be mounted inside enclosure 132, for example, by a mounting system 136. The FIG. 8 embodiment may employ any of the previously described arrangements of maintenance system 134, which are collectively shown schematically by dashed box 218.

Conduits 150, 166 described herein can be any now known or later developed tubing, piping, ducts, etc., capable of delivering air and withstanding the environment in which employed. As an option, any conduit 150, 166 may include a filter 220 therein to filter air passing therethrough.

Embodiments of the disclosure provide a maintenance system for a flame detector that is easy to add to any GT system and easy to access from outside of the enclosure. The maintenance system can clean and/or cool parts of the flame detector.

## Claims

1. A system (90), comprising:
a turbomachine (100);
an enclosure (132), wherein the turbomachine (100) is positioned within the enclosure (132);
a flame detector (130) operatively coupled to the enclosure (132); and
a maintenance system (134) for the flame detector (130), the maintenance system (134) comprising:
a conduit (150) having an inlet (152) at an exterior (154) of the enclosure (132) and an outlet (156) at an interior (146) of the enclosure (132), the outlet (156) adjacent the flame detector (130); and
a metering orifice (200) on the inlet (152) of the conduit (150),
wherein the enclosure (132) has a negative pressure (190) therein to create a compressed air (170) from ambient air (160) drawn into the metering orifice (200), and
wherein the compressed air (170) exits through the outlet (156) of the conduit (150) onto a surface (143) of the flame detector (130), thereby removing contaminants (142) from the surface (143) and/or cooling the surface (143).

2. The system (90) of claim 1, wherein the outlet (156) of the conduit (150) includes at least one nozzle (210) thereon.

3. The system (90) of claim 1 or 2, wherein the turbomachine (100) is a gas turbine, GT, system including: a compressor (102), a combustor assembly (108), and a gas turbine (104) operatively coupled to the compressor (102) and the combustor assembly (108).

## Patentansprüche

1. System (90), umfassend:
eine Turbomaschine (100);
ein Gehäuse (132), wobei die Turbomaschine (100) innerhalb des Gehäuses (132) positioniert ist;
einen Flammendetektor (130), der mit dem Gehäuse (132) wirkgekoppelt ist; und
ein Wartungssystem (134) für den Flammendetektor (130), das Wartungssystem (134) umfassend:
eine Leitung (150), die einen Einlass (152) an einer Außenseite (154) des Gehäuses (132) und einen Auslass (156) an einer Innenseite (146) des Gehäuses (132) aufweist, wobei der Auslass (156) an den Flammendetektor (130) angrenzt; und
eine Dosieröffnung (200) auf dem Einlass (152) der Leitung (150),
wobei das Gehäuse (132) einen Unterdruck (190) darin aufweist, um eine Druckluft (170) aus Umgebungsluft (160), die in die Dosieröffnung (200) eingesaugt wird, zu erzeugen, und
wobei die Druckluft (170) durch den Auslass (156) der Leitung (150) auf eine Oberfläche (143) des Flammendetektors (130) austritt, wobei dadurch Verunreinigungen (142) von der Oberfläche (143) entfernt werden und/oder die Oberfläche (143) gekühlt wird.

2. System (90) nach Anspruch 1, wobei der Auslass (156) der Leitung (150) mindestens eine Düse (210) darauf einschließt.

3. System (90) nach Anspruch 1 oder 2, wobei die Turbomaschine (100) ein Gasturbinensystem, GT-System, ist, einschließlich: eines Verdichters (102), einer Brennkammeranordnung (108) und einer Gasturbine (104), die mit dem Verdichter (102) und der Brennkammeranordnung (108) wirkgekoppelt ist.

## Revendications

1. Système (90), comprenant :
une turbomachine (100) ;
une enceinte (132), dans lequel la turbomachine (100) est positionnée à l'intérieur de l'enceinte (132) ;
un détecteur de flamme (130) couplé de manière fonctionnelle à l'enceinte (132) ; et
un système de maintenance (134) pour le détecteur de flamme (130), le système de maintenance (134) comprenant :
un conduit (150) ayant une entrée (152) au niveau d'un extérieur (154) de l'enceinte (132) et une sortie (156) au niveau d'un intérieur (146) de l'enceinte (132), la sortie (156) étant adjacente au détecteur de flamme (130) ; et
un orifice de dosage (200) sur l'entrée (152) du conduit (150),
dans lequel l'enceinte (132) a une pression négative (190) à l'intérieur de celle-ci pour créer un air comprimé (170) à partir de l'air ambiant (160) aspiré dans l'orifice de dosage (200), et
dans lequel l'air comprimé (170) sort par la sortie (156) du conduit (150) sur une surface (143) du détecteur de flamme (130), éliminant ainsi des contaminants (142) de la surface (143) et/ou refroidissant la surface (143).

2. Système (90) selon la revendication 1, dans lequel la sortie (156) du conduit (150) comporte au moins une buse (210) sur celle-ci.

3. Système (90) selon la revendication 1 ou 2, dans lequel la turbomachine (100) est un système de turbine à gaz, GT, comportant : un compresseur (102), un ensemble chambre de combustion (108) et une turbine à gaz (104) accouplée de manière opérationnelle au compresseur (102) et à l'ensemble chambre de combustion (108).
